## Europäisches Patentamt

## European Patent Office

## Office européen des brevets

(19)

(11) Veröffentlichungsnummer: **0 025 203**
**A1**

(12) # EUROPÄISCHE PATENTANMELDUNG

(21) Anmeldenummer: **80105205.1**

(22) Anmeldetag: **02.09.80**

(51) Int. Cl.³: **B 60 B 39/08**

(30) Priorität: **08.09.79 DE 2936333**

(43) Veröffentlichungstag der Anmeldung:
**18.03.81 Patentblatt 81/11**

(84) Benannte Vertragsstaaten:
**AT BE CH DE FR GB LI LU NL SE**

(71) Anmelder: **SAPI-Drucklufttechnik GmbH.**
**Würzburger Strasse 7**
**D-8860 Nördlingen(DE)**

(72) Erfinder: **Fertl, Klaus**
**Würzburger Strasse 7**
**D-8860 Nördlingen(DE)**

(74) Vertreter: **Glöser, Otto**
**Sudetenstrasse 6**
**D-8076 Ebenhausen-Werk(DE)**

(54) **Streuvorrichtung für Strassenfahrzeuge.**

(57) Um bei einer Streuvorrichtung für Straßenfahrzeuge mit mindestens einem Streugutbehälter und einer oder mehreren Druckluftdüsen zum Entleeren desselben einen sparsamen Verbrauch an Streugut und Druckluft zu ermöglichen, ist jede mit einer vom Fahrer bedienbaren Druckluftquelle verbundene Druckluftdüse (8) in einen Rohrkrümmer (17) mit zwei Armen eingesetzt, von denen der eine an den Streugutbehälter und der andere an eine in den Spalt zwischen dem zugeordneten Rad und der Fahrbahn gerichtete Streuleitung (5) angeschlossen ist. Die Druckluftdüse (8) ist dabei in Förderrichtung so weit in den an die Streuleitung (5) angeschlossenen Arm eingeführt, daß sich ihr Luftaustrittsquerschnitt (22) vorzugsweise im Bereich der Streugut-Schüttkante (25) befindet.

./...

FIG 2

## Streuvorrichtung für Straßenfahrzeuge

Die Erfindung betrifft eine Streuvorrichtung für Straßenfahrzeuge mit mindestens einem Streugutbehälter, der durch eine oder mehrere Druckluftdüsen entleerbar ist.

Eine Anordnung dieser Art ist aus der DE-OS 28 00 709 bekannt. Bei dieser bekannten Anordnung soll das Streugut in Abhängigkeit von dem Signal eines Glättefühlers und von der Betätigung der Bremse praktisch auf der gesamten Fahrzeugbreite auf die Fahrbahn gestreut werden. Auf Grund der hier vorgesehenen großen Streubreite ist bei der bekannten Anordnung ein verhältnismäßig großer Verbrauch an Streugut und Preßluft zu erwarten, so daß die Reichweite des mitgeführten Vorrats äußerst beschränkt sein dürfte. Hinsichtlich der Ausbildung und der Arbeitsweise der zum Streuen unter anderen im Vorschlag gebrachten Luftdüsen enthält die DE-OS 28 00 709 keine Ausführungen. Es dürfte jedoch auf jeden Fall davon auszugehen sein, daß die hier vorgesehene große Streubreite einen verhältnismäßig aufwendigen Düsenaufbau erfordert. Ein weiterer Nachteil der bekannten Anordnung ist darin zu sehen, daß infolge der Kopplung der Streuvorrichtung an einen Glättefühler praktisch keine Möglich-

2

keit zur individuellen Inanspruchnahme der Streuvorrichtung besteht, was sich negativ auf die Verkehrssicherheit auswirken dürfte, da die bekannte Streuvorrichtung somit in vielen Fällen nicht in Betrieb nehmbar ist, in denen vom Fahrer eine Straßenstreuung für
notwendig erachtet wird.

Hiervon ausgehend ist es daher die Aufgabe der vorliegenden Erfindung unter Vermeidung der Nachteile der
bekannten Anordnungen eine Streuvorrichtung eingangs
erwähnter Art zu schaffen, die einen sparsamen Verbrauch an Streugut und Druckluft ermöglicht und dennoch nicht nur einfach und übersichtlich aufgebaut
ist und zuverlässig arbeitet, sondern auch vom Fahrzeugführer den individuellen Bedürfnissen entsprechend einsetzbar ist.

Die Lösung dieser Aufgabe besteht erfindungsgemäß
darin, daß die über eine Druckluftleitung mit einer
vom Fahrzeuginnenraum aus aktivierbaren bzw. passivierbaren Druckluftquelle verbundene Druckluftdüse
in Förderrichtung in einen mit einem Schenkel an einen
bodenseitigen, vorzugsweise als Trichter ausgebildeten Auslauf des Streugutbehälters und mit einem weiteren Schenkel an eine Streuleitung angeschlossenen,
vorzugsweise als Rohrkrümmer ausgebildeten Umlenkkanal eingesetzt ist und mit seinem Luft-Austrittsquerschnitt bis in den Bereich des an die Streuleitung angeschlossenen Schenkels des Umlenkkanals reicht, und
daß zumindest jedem angetriebenem Rad eine vorzugsweise als flexibler Schlauch ausgebildete Streuleitung zugeordnet ist, die einen Streukegel von etwa der
Spurbreite des zugeordneten Rads erzeugt und mit ihrem
Auswurfende in den Spalt zwischen zugeordnetem Rad und
der Fahrbahn gerichtet ist.

Die erfindungsspezifische Ausbildung und Anordnung der Druckluftdüse in dem direkt an den Streugutbehälter angesetzten Umlenkkanal stellt sicher, daß im Bereich des freien Luft-Austrittsquerschnitts der Druckluftdüse stets eine lockere Schüttung von aus dem Streugutbehälter in den Umlenkkanal nachrutschendem Streugut zur Verfügung steht, das somit mit geringem Lufteinsatz in der gewünschten kleinen Dosierung durch die Streuleitung hindurch transportierbar ist. Die erfindungsgemäßen Maßnahmen ergeben demnach auch noch bei den erwünschten kleinen Durchsatzmengen einen zuverlässigen Transport des Streuguts durch die Streuleitung hindurch und gewährleisten somit eine hohe Zuverlässigkeit bei sparsamem Verbrauch. Der Umlenkkanal selbst verhindert ein selbsttätiges Auslaufen des Behälters und ermöglicht somit eine einfache Steuerung des Streuvorgangs durch Ein- bzw. Ausschalten der Luftbeaufschlagung. Dies läßt sich in vorteilhafter Weise vom Fahrzeuginnenraum aus bewerkstelligen, was eine individuelle Inanspruchnahme der Streuvorrichtung ermöglicht und somit der Verkehrssicherheit sehr zuträglich ist. Die mittels der Druckluftdüse mit ausreichend Streumaterial beaufschlagte Streuleitung kann mit ihrem freien Austrittsende in vorteilhafter Weise gezielt auf die Radspur gerichtet werden, so daß bereits geringe Mengen an Streumaterial ausreichen, um die erwünschte Bodenreibung des jeweils zugeordneten Rads zu gewährleisten. Der zur Bildung der Streuleitung vorgeschlagene flexible Schlauch ist in vorteilhafter Weise leicht verlegbar, was die Montagearbeiten außerordentlich erleichtert. Zudem kann dabei der Auswurfquerschnitt der Streuleitung leicht in den Spalt zwischen dem zugeordneten Rad und der Fahrbahn gerichtet sein, so daß der Berührungsbereich mit aus-

4

reichend Streugut versorgt wird. Die mit der Erfindung erzielbaren Vorteile sind demnach insbesondere in einer ausgezeichneten Wirtschaftlichkeit zu sehen.

In einer besonders vorteilhaften Ausgestaltung der übergeordneten Maßnahmen kann der die Druckluftdüse bildende Rohrabschnitt mit seinem Luft-Austrittsquerschnitt gegenüber der Achse des an die Streuleitung angeschlossenen Schenkels des Umlenkkanals schräg nach unten geneigt sein. Bei dieser Ausgestaltung trifft der Luftstrahl auf die benachbarte Wandung des Umlenkkanals auf, wodurch eine ausgezeichnete Verwirbelung und damit eine gute Mitnahme des Streumaterials erfolgt.

Für besonders harte Einsatzfälle kann es vorteilhaft sein, wenn die Streuleitung zumindest im Bereich des Auswurfquerschnitts beheizt ist und somit automatisch freigehalten wird von gefrierendem Spritzwasser bzw. Spritzmatsch.

Eine für Personenkraftwagen besonders geeignete Ausgestaltung der übergeordneten Maßnahmen kennzeichnet sich dadurch, daß als Druckquelle ein Kompressor vorgesehen ist, der mittels eines vom Fahrzeuginnenraum aus ein- bzw. ausschaltbaren Elektromotors antreibbar ist. Da auf Grund der übergeordneten Maßnahmen ein verhältnismäßig geringer Luftbedarf sichergestellt ist, kann vorteilhaft jedem Streuschlauch ein eigener Kleinkompressor zugeordnet sein, dessen Elektromotor zweckmäßig mit der Fahrzeugbatterie betrieben werden kann. Dadurch, daß jedem Streuschlauch ein eigener Streugutbehälter zugeordnet ist, läßt sich in vorteilhafter Weise gleichzeitig ein symmetrischer Aufbau und damit eine gleichmäßige Lastverteilung erreichen.

Für Fahrzeuge mit eingebauter Druckluftanlage, wie Lastkraftwagen, kann als Druckquelle vorteilhaft ein sämtlichen Streuleitungen gemeinsamer Druckkessel vorgesehen sein, der parallel zum Druckkessel der eingebauten Druckluftanlage geschaltet ist. Zur Bewerkstelligung einer einfachen Steuerung können dabei die zum Druckkessel führenden Druckluftleitungen einfach über ein Druckregel- und -absperrventil geführt sein, das vom Fahrzeuginnenraum aus betätigbar ist.

Zur Aufnahme des bzw. der Streugutbehälter kann jeweils ein von unten an der Ladepritsche aufgehängter Tragrahmen vorgesehen sein, auf welchem der zugeordnete Streugutbehälter mit seiner Einfüllöffnung nach außen kippbar aufgehängt ist. Diese Maßnahmen gewährleisten eine platzsparende Unterbringung und gleichzeitig eine leichte Nachfüllbarkeit.

In Fortführung des übergeordneten Gedankens, daß zumindest jedem angetriebenen Rad ein eigener Streuschlauch zugeordnet sein soll, kann bei Fahrzeugen mit Mehrfachbereifung an jedem Streugutbehälter eine der Reifenzahl pro Nabe entsprechende Zahl von Streuschläuchen angeschlossen sein. Zweckmäßig ist dabei pro Fahrzeugseite ein Streugutbehälter vorgesehen.

Vorteilhafte Ausgestaltungen und zweckmäßige Fortbildungen der übergeordneten Maßnahmen ergeben sich aus den Unteransprüchen.

Nachstehend sind einige Ausführungsbeispiele anhand der Zeichnung näher erläutert. In der Zeichnung zeigen:

Figur 1    ein Blockschaltbild einer für einen Personenkraftwagen bestimmten Streuvorrichtung,

Figur 2    einen Schnitt durch den mit einer Druckluftdüse bestückten Umlenkkanal,

Figur 3    eine schematische Darstellung eines Einbaubeispiels anhand eines Personenkraftwagens mit angetriebenen Hinterrädern,

Figur 4    ein Beispiel für die Abdichtung des Streuschlauchs im Bereich einer Durchsteckausnehmung,

Figur 5    ein Blockschaltbild einer für einen Lastkraftwagen bestimmten Streuvorrichtung,

Figur 6    ein Montagebeispiel mit einem für einen Lastkraftwagen bestimmten Streugutbehälter und

Figur 7    ein Beispiel für eine Streuschlauchheizung.

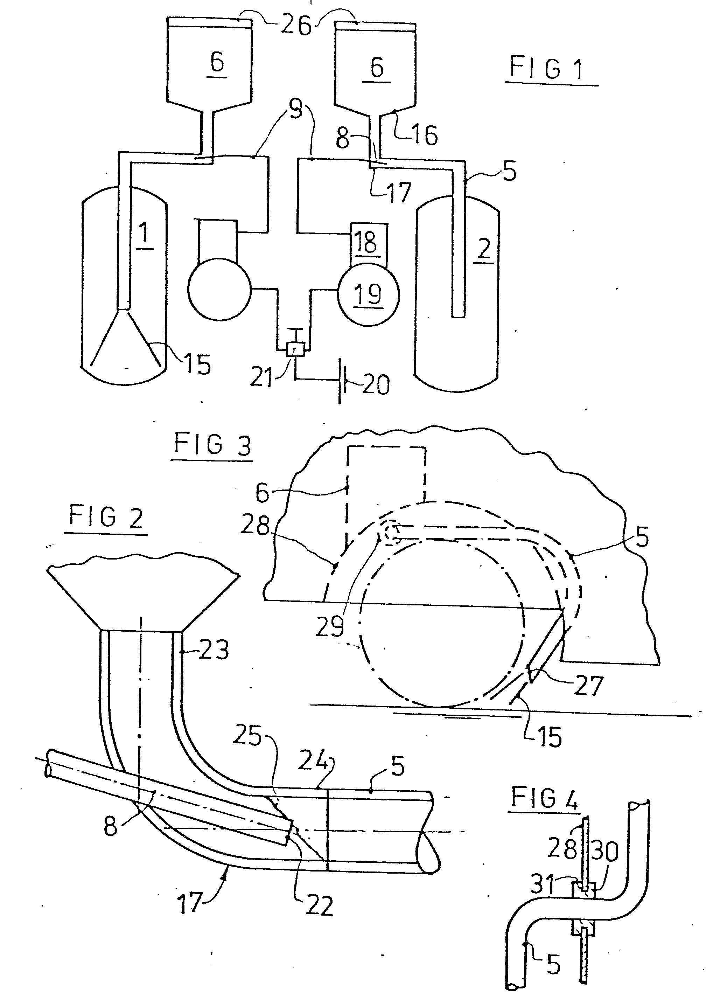

In Figur 1 sind mit 1 bzw. 2 die angetriebenen Hinterräder eines Personenkraftwagens bezeichnet. Jedem angetriebenen Rad ist hier ein bei 5 angedeuteter Streuschlauch zugeordnet, mittels dessen die Spur des zugeordneten Rads 1 bzw. 2 gestreut werden kann, wie durch den Streukegel 15 angedeutet ist, der zumindest dieselbe Breite wie das jeweils zugeordnete Rad erreichen soll. Als Streumaterial findet zweckmäßig getrockneter, schadstoffreier Sand mit einer Korngröße von 0,5 bis 1,5 mm Verwendung. Jeder Streuschlauch 5 wird von einem zugeordneten Streugutbehälter 6 aus mit Streugut beaufschlagt, das mit Hilfe von Preßluft durch den Streuschlauch 5 hindurchtransportiert wird. Hierzu ist jeder Streugutbehälter 6 mit einem bodenseitig angeordneten, zweckmäßig trichterförmig ausgebildeten Auslauf 16 versehen, an den der zugehörige Streuschlauch 5 über einen Umlenkkanal 17 angeschlossen ist, in den eine bei 8 angedeutete Preßluftdüse eingesetzt ist, die über eine Preßluftleitung 9 mit einer Druckquelle verbunden ist. Im dargestellten Ausführungsbeispiel ist jedem Streuschlauch 5 eine eigene Druckquelle zugeordnet. Hierzu findet im dargestellten Ausführungsbeispiel jeweils ein Kleinkompressor 18 Verwendung, der mittels eines Elektromotors 19 antreibbar ist, welcher von der Fahrzeugbatterie 20 aus mit Strom versorgt wird. Die Elektromotoren 19 der beiden Kompressoren 18 sind zweckmäßig gemeinsam vom Fahrzeuginnenraum aus steuerbar. Dies ist durch einen gemeinsamen, in der Stromversorgungsleitung liegenden Schalter 21 verdeutlicht, der etwa im Bereich des Armaturenbretts oder neben dem Fahrersitz angeordnet sein kann.

Die Druckluftdüse 8 wird, wie am besten aus Figur 2 erkennbar ist, einfach durch einen Rohrabschnitt gebildet, der mit seinem freien Luft-Austrittsende 22 in Transportrichtung weisend in den hier als zweischenkeliger Rohrkrümmer ausgebildeten Umlenkkanal 17 eingesetzt ist und soweit in diesen hineinragt, daß der Querschnitt des an den Auslauf 16 angesetzten Schenkels 23 des Umlenkkanals 17 von dem die Druckluftdüse 8 bildenden Rohrabschnitt überquert wird und das Luftaustrittsende 22 im Bereich des an den Streuschlauch 5 angeschlossenen Schenkels 24 des Umlenkkanals 17 liegt. Die Länge des die Druckluftdüse 22 bildenden Rohrabschnitts ist dabei zweckmäßig so zu bemessen, daß das freie Luftaustrittsende etwa im Bereich der im Umlenkkanal 17 sich ergebenden, bei 25 angedeuteten Streugut-Schüttkante liegt. Hierdurch ist sichergestellt, daß bereits kleine Luftmengen mit geringer Geschwindigkeitsenergie ausreichen, um das locker liegende Streugut in den Streuschlauch 5 hineinzublasen. Durch Injektorwirkung wird gleichzeitig stets neues Streugut nachgezogen. Dadurch, daß der Luft-Austrittsquerschnitt 22 bereits in dem an den Streuschlauch 5 angesetzten Schenkel 24 des Umlenkkanals 17 liegt, wird außerdem ein Entweichen von Druckluft in den Streugutbehälter 6 vermieden. Wie Versuche gezeigt haben, kann es vielfach zweckmäßig sein, die Streugutbehälter 6 mittels eines in Figur 1 bei 26 angedeuteten Deckels luftdicht zu verschließen. Die durch den Umlenkkanal 17 bewerkstelligte Umlenkung des Streuguts von der Vertikalen in die Horizontale verhindert ein selbsttätiges Auslaufen der Streugutbehälter 6 bei einem Abschalten der Druckluft und ermöglicht somit eine einfache Steuerung. Der die Druckluftdüse 8 bildende Rohrabschnitt ist, wie Figur 2 weiter erkennen läßt, gegenüber der Achse des an die Streuleitung 5 angeschlossenen Schenkels 24 des Umlenkkanals 17 so geneigt, daß der freie Luft-Austrittsquerschnitt 22 schräg nach unten weist, was eine sanfte Sandabnahme im Bereich der Schüttkante 25 sowie eine intensive Verwirbelung bzw. Verdrillung der Luft durch Aufprall auf die Rohrwandungen ergibt.

Bei einer für einen Personenkraftwagen bestimmten Streuvorrichtung, wie sie der Figur 1 zugrunde liegt, genügt ein Luftdurchsatz von etwa 30 l pro Minute bei einem Druck von etwa 0,1 bis 0,5 atü. Die Kompressoren 18 mit zugeordneten Elektromotor 19 können daher verhältnismäßig leicht dimensioniert sein, und ohne weiteres über die Fahrzeugbatterie angetrieben werden. Der Durchmesser des die Druckluftdüse 8 bildenden Rohrabschnitts kann sich dabei zum Durchmesser des Umlenkkanals 17 bzw. der Streuleitung 5 wie 1 : 3 verhalten. Mit einer 4 Millimeter-Düse und einer 1/2 Zoll-Leitung wurden bei Versuchen ausgezeichnete Ergebnisse erreicht.

Zur Bildung der Streuleitung 5 kann zweckmäßig ein flexibler Schlauch Verwendung finden, der sich leicht der gegebenen Kontur der Fahrzeugkarosserie anpassen läßt und daher verhältnismäßig einfach montiert werden kann. Die Streuleitung 5 kann, wie am besten aus Figur 3 erkennbar ist, mit ihrem freien Auswurfende 27 zweckmäßig so geneigt sein, daß der Streukegel 15 in den Spalt zwischen dem zugeordneten Rad 1 bzw. 2 und der Fahrbahn gerichtet ist. In der Regel genügt es, wenn lediglich vor den angetriebenen Rädern gestreut wird. Es ist aber auch ohne weiteres möglich, auch dem rückwärtigen Spalt zwischen Rad und Fahrbahn eine Streuleitung 5 zuzuordnen, die dann bei Rückwärtsfahrten aktiviert werden kann. Der die Streuleitung 5 bildende Schlauch ist, wie Figur 3 weiter erkennen läßt, im Bereich seines freien Endes etwa vertikal abgeschrägt, was einen sauberen Auswurf ergibt. Zur Verkürzung der Streuleitungen 5 können die jeweils zugeordneten Streugutbehälter 6 zweckmäßig in der Nähe der jeweils zugeordneten Räder angeordnet sein. Bei Fahrzeugen mit Frontantrieb können die Streugutbehälter 6 zweckmäßig im Motorraum etwa im Bereich oberhalb der Vorderrad-Aufhängung angeordnet sein. Bei Fahrzeugen mit Hinterradantrieb eignet sich am besten der hintere Kofferraum zur Unterbringung der Streugutbehälter 6 und gegebenenfalls auch der jeweils zugeordneten Kompressoren 18. Als besonders zweckmäßig kann es sich dabei erweisen, wenn die Streugutbehälter 6 als Kunststoff-Formlinge ausgebildet sind, deren Kontur an die benachbarte Kontur der Fahrzeugkarosserie angepaßt ist, wie in Figur 3 anhand des hier schematisch angedeuteten, an die Kontur des bei 28 angedeuteten Radkastens angepaßten Streugutbehälters 6 angedeutet ist.

Bei dem der Figur 3 zugrunde liegenden Ausführungsbeispiel soll die Streuleitung 5 durch eine bei der Montage herzustellende Ausnehmung 29 des Radkastens 28 vom hinteren Fahrzeugkofferraum in den Kotflügelraum herausgeführt sein. Zur Ausnehmung der bei der Montage einfach durch eine Bohrung herstellbaren Ausnehmung 29 kann, wie Figur 4 anschaulich erkennen läßt, zweckmäßig ein Gummistopfen 30 Verwendung finden, der auf die Streuleitung 5 aufgezogen ist und den Rand der Ausnehmung 29 mit Dichtlippen 31 übergreift. Es wäre auch ohne weiteres denkbar, den Stopfen 30 direkt auf einen die Streuleitung 5 bildenden flexiblen Schlauch aufzuformen.

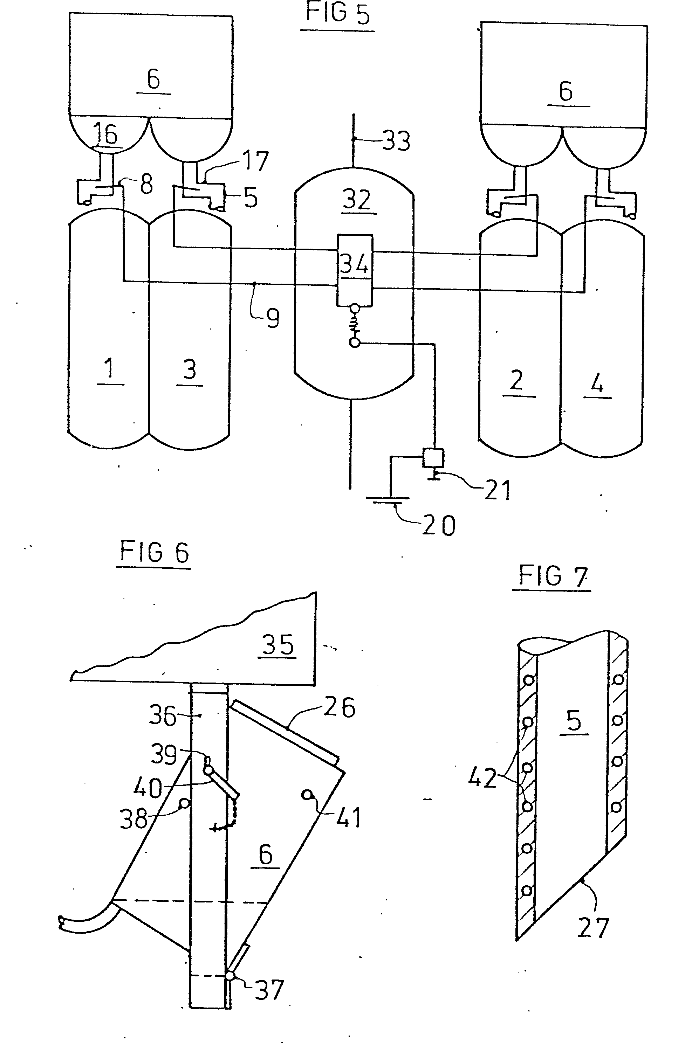

Bei Lastkraftwagen ist in der Regel eine eingebaute Druckluftanlage vorhanden. Bei Fahrzeugen dieser Art kann als Druckquelle, wie Figur 5 zeigt, ein Druckkessel 32 vorgesehen sein, der parallel zum hier nicht näher dargestellten Druckkessel der eingebauten Druckluftanlage liegt, wie durch die Versorgungsleitungen 33 angedeutet ist. Der Druckkessel 32 kann einfach so dimensioniert sein, daß hiermit sämtliche Streuleitungen 5 versorgt werden können. Zur Steuerung der Druckluftzufuhr ist ein bei 34 angedeutetes, zweckmäßig als Magnetventil ausgebildetes Druckregel- und -absperrventil vorgesehen, über welches die vom Druckkessel 32 zu den Druckluftdüsen 8 führenden Druckluftleitungen 9 laufen. Dieses Ventil 34 kann einfach von der Fahrzeugbatterie 20 aus mit Strom versorgt werden. In der Stromversorgungsleitung ist ein im Fahrzeuginnenraum angeordneter Schalter 21 vorgesehen, der eine individuelle Inbetriebnahme der Streuvorrichtung ermöglicht.

Zweckmäßig kann pro Fahrzeugseite jeweils ein Streubehälter 6 vorgesehen sein. Zur Aufnahme dieser Streubehälter 6 kann jeweils, wie am besten aus Figur 6 erkennbar ist, ein von unten an der bei 35 angedeuteten Ladepritsche aufgehängter Tragrahmen 36 vorgesehen sein, auf dem der zugehörige Streugutbehälter 6 mit seiner durch einen Deckel 26 abgedeckelten Einfüllöffnung nach außen kippbar aufgehängt ist. Im dargestellten Ausführungsbeispiel findet hierzu einfach ein Scharnier 27 Verwendung, mit welchem der Streugutbehälter 6 am unteren Joch des Tragrahmens 36 festgelegt ist. Die Kippbewegung wird einfach durch einen am Streugutbehälter 6 befestigten, am Tragrahmen 36 zur Anlage kommenden Sperrstift 38 begrenzt. Zur Sicherung der normalen Betriebsstellung kann ein mit einer Nase 39 versehener Stecker 40 Verwendung finden, der durch eine entsprechende Ausnehmung in einem seitlichen Schenkel des Tragrahmens 36 durchsteckbar und mit seinem vorderen Ende in eine zugeordnete Rastmulde einer Seitenwandung des zugeordneten Streugutbehälters 6 einführbar ist.

Jedem der bei 1 bis 4 angedeuteten angetriebenen Räder ist jeweils eine zweckmäßig ebenfalls als flexibler Schlauch ausgebildete Streuleitung 5 zugeordnet. Diese Schläuche können an der Innenseite der in Figur 5 nicht näher dargestellten Kotflügel bis in den Bereich von am unteren Kotflügelrand angeordneten Spritzlappen geführt werden. Bei Zwillingsbereifung, wie im vorliegenden Fall, ist jeder der einer Fahrzeugseite jeweils zugeordneten Streugutbehälter 6 mit zwei Ausläufen versehen, von denen über jeweils einen Umlenkkanal 17 jeweils ein Streuschlauch abgeht. Der Aufbau und die Anordnung der Druckluftdüsen 8 entspricht der aus Figur 2 entnehmbaren Lehre, wobei ein Durchmesserverhältnis von Druckluftdüse 8 zu Umlenkkanal 17 von etwa 2 : 3 gewählt ist. Mit einer 8 Millimeter-Düse und einer 1/2 Zoll-Leitung wurden bei einem Luftdruck in der Größenordnung von 1 bis 1,5 atü ausgezeichnete Ergebnisse erzielt.

Normalerweise hält der die Streuleitung 5 durchsetzende Sandstrahl deren Austrittsende 27 frei. Zur Vermeidung eines Zusetzens des freien Austrittsquerschnitts der Streuleitung 5 durch gefrierendes Spritzwasser bzw. gefrierenden Spritzmatsch bei besonders rauhen Einsatzverhältnissen kann es sich als zweckmäßig erweisen, die Streuleitung 5 ganz oder vorzugsweise jedenfalls im Bereich des Austrittsendes 27 zu beheizen. Bei dem in Figur 7 dargestellten Ausführungsbeispiel ist hierzu eine Widerstandsheizung vorgesehen, wie durch die in den die Streuleitung 5 bildenden Schlauch integrierten Heizwendeln 42 angedeutet ist. Eine derartige Widerstandsheizung kann zweckmäßig über die Fahrzeugbatterie mit Strom versorgt werden, wobei in der Stromversorgungsleitung ein im

13

Fahrzeuginnenraum angeordneter Schalter vorgesehen sein kann. Es wäre aber auch ohne weiteres denkbar, die Streuleitung 5 dadurch zu beheizen, daß einfach vorgewärmte Luft Verwendung findet. Diese kann etwa der Fahrzeug-Heizungsanlage entnommen werden. Eine andere Ausführung kann darin bestehen, die Streuleitungen 5 über die Druckluftdüsen 8 einfach ganz oder teilweise mit heißen Abgasen zu beaufschlagen, die der Auspuffanlage entnommen und gegebenenfalls durch einen Kompressor 19 verdichtet werden.

Vorstehend sind zwar einige besonders bevorzugte Ausführungsbeispiele der Erfindung näher erläutert, ohne daß jedoch hiermit eine Beschränkung verbunden sein soll. So könnte als Druckluftquelle auch ein Druckkessel Verwendung finden, der mit einem Nachfüllventil versehen ist, so daß praktisch an jeder Tankstelle Druckluft übernommen werden kann.

Patentansprüche

1) Streuvorrichtung für Straßenfahrzeuge mit mindestens einem Streugutbehälter, der durch eine oder mehrere Druckluftdüsen entleerbar ist, dadurch gekennzeichnet, daß die über eine Druckluftleitung (9) mit einer vom Fahrzeuginnenraum aus aktivierbaren bzw. passivierbaren Druckluftquelle (18 bzw. 32) verbundene Druckluftdüse (8) in Förderrichtung in einen mit einem Schenkel (23) an einen bodenseitigen, vorzugsweise als Trichter ausgebildeten Auslauf (16) des Streugutbehälters (6) und mit einem weiteren Schenkel (24) an eine Streuleitung (5) angeschlossenen, vorzugsweise als Rohrkrümmer ausgebildeten Umlenkkanal (17) eingesetzt ist und mit seinem Luft-Austrittsquerschnitt (22) bis in den Bereich des an die Streuleitung (5) angeschlossenen Schenkels (24) des Umlenkkanals (17) reicht, und daß zumindest jedem angetriebenen Rad (1 bzw. 2 bzw. 3 bzw. 4) eine vorzugsweise als flexibler Schlauch ausgebildete Streuleitung (5) zugeordnet ist, die einen Streukegel (15) von etwa der Spurbreite des zugeordneten Rads erzeugt und mit ihrem Auswurfende (27) in den Spalt zwischen zugeordnetem Rad (1 bzw. 2

2

bzw. 3 bzw. 4) und der Fahrbahn gerichtet ist.

2) Streuvorrichtung nach Anspruch 1, dadurch gekennzeichnet, daß die Druckluftdüse (8) als Rohrabschnitt ausgebildet ist, der unter Überquerung des an den Streugutbehälter (6) angesetzten Schenkels (23) des Umlenkkanals (17) in Förderrichtung in den an die Streuleitung (5) angeschlossenen Schenkel (24) des Umlenkkanals (17) hineinragt und mit seinem vorzugsweise gegenüber der Achse des an die Streuleitung (5) angeschlossenen Schenkels (24) des Umlenkkanals (17) schräg nach unten geneigten Luft-Austrittsquerschnitt (22) bis in den Bereich der im Umlenkkanal (17) sich ergebenden Streugut-Schüttkante (25) reicht.

3) Streuvorrichtung nach wenigstens einem der vorhergehenden Ansprüche, dadurch gekennzeichnet, daß der Durchmesser des die Druckluftdüse (8) bildenden Rohrabschnitts etwa 1/3 bis 2/3 des Durchmessers des zugeordneten Umlenkkanals (17) bzw. der zugeordneten Streuleitung (5) beträgt, wobei vorzugsweise der Druck der von der Druckquelle (18 bzw. 32) abgegebenen Luft unter 1,5 atü liegt, vorzugsweise zwischen 0,1 und 0,3 atü bei einem Durchmesserverhältnis von 1 : 3 und bei 1 atü bei einem Durchmesserverhältnis von 2 : 3.

4) Streuvorrichtung nach wenigstens einem der vorhergehenden Ansprüche, dadurch gekennzeichnet, daß als Streumaterial getrockneter, schadstoffreier Sand mit einer Korngröße von etwa 0,5 bis 1,5 mm Verwendung findet.

5) Streuvorrichtung nach wenigstens einem der vorhergehenden Ansprüche, <u>dadurch gekennzeichnet, daß</u> die Streuleitung (5) zumindest im Bereich ihres freien Endes (27), vorzugsweise mittels einer Widerstandsheizung (42) beheizt ist.

6) Streuvorrichtung nach wenigstens einem der vorhergehenden Ansprüche, <u>dadurch gekennzeichnet, daß</u> jeder Streuleitung (5) als Druckquelle ein eigener Kompressor (18) zugeordnet ist, der mittels eines vom Fahrzeuginnenraum aus ein- bzw. ausschaltbaren Elektromotors (19) antreibbar ist, der vorzugsweise von der Fahrzeugbatterie (20) mit Strom versorgbar ist.

7) Streuvorrichtung nach Anspruch 6, <u>dadurch gekennzeichnet, daß</u> jeder Streuleitung (5) ein eigener Streugutbehälter (6) zugeordnet ist, der in der Nähe der jeweils zugeordneten Fahrzeugräder (1 bzw. 2 bzw. 3 bzw. 4) angeordnet und vorzugsweise als Kunststoff-Formling ausgebildet ist, dessen Kontur der benachbarten Kontur der Fahrzeugkarosserie angepaßt ist, und daß die Ausnehmungen (29) der Fahrzeugkarosseriewandungen (28) zur Durchführung einer Streuleitung (5) mittels eines auf die Streuleitung (5) aufgesetzten bzw. aufgeformten Stopfens (30) abgedichtet sind.

8) Streuvorrichtung nach wenigstens einem der vorhergehenden Ansprüche 1 bis 5 für Fahrzeuge mit eingebauter Druckluftanlage, <u>dadurch gekennzeichnet, daß</u> als Druckquelle ein vorzugsweise sämtlichen Streuleitungen (5) zugeordneter Druckkessel (32) vorgesehen ist, der parallel zum Druckkessel der

4

eingebauten Druckluftanlage geschaltet ist, und daß die zum Druckkessel (32) führenden Druckluftleitungen (9) über ein vorzugsweise als Magnetventil ausgebildetes Druckregel- und -absperrventil (34) laufen, das vom Fahrzeuginnenraum aus betätigbar ist.

9) Streuvorrichtung nach Anspruch 8, <u>dadurch gekennzeichnet, daß</u> jeder Fahrzeugseite ein Streugutbehälter (6) zugeordnet ist, wobei an jedem Streugutbehälter (6) eine der Reifenzahl pro angetriebenen Nabe entsprechende Zahl von als Schläuche ausgebildeten Streuleitungen (5) angeschlossen ist, die jeweils am Kotflügel bzw. an einem hieran befestigten Spritzlappen befestigt und bis in den Bereich des zwischen dem zugeordneten Rad und der Fahrbahn sich ergebenden Spalt geführt sind.

10) Streuvorrichtung nach wenigstens einem der vorhergehenden Ansprüche 8 und 9, <u>dadurch gekennzeichnet, daß</u> den Streugutbehältern (6) jeweils ein von unten an der Ladepritsche (35) aufgehängter Tragrahmen (36) zugeordnet ist, auf dem der zugehörige Streugutbehälter (6) mit seiner Einfüllöffnung nach außen kippbar aufgehängt ist.

FIG 1

FIG 3

FIG 2

FIG 4

FIG 5

FIG 6

FIG 7

| Europäisches Patentamt | EUROPÄISCHER RECHERCHENBERICHT | Nummer der Anmeldung EP 80 10 5205.1 |
|---|---|---|

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl.³) |
|---|---|---|---|
| | FR - A - 1 310 449 (R. THIMONIER et al.) <br> * ganzes Dokument * <br> -- | 1,2, 7-9 | B 60 B 39/08 |
| | CH - A - 288 051 (M. CURTA et al.) <br> * Zeilen 15 bis 40; Fig. 1 * <br> -- | 1,6-8 | |
| | DE - B - S 1097 II/63 bekannt gemacht 17-05-1980 (W. SEEGER) <br> * ganzes Dokument * <br> -- | 1,2,7, 8 | **RECHERCHIERTE SACHGEBIETE (Int. Cl.³)** |
| | DE - C - 878 605 (ROBERT BOSCH GMBH) <br> * ganzes Dokument * <br> -- | 1,2,8 | B 60 B 39/00 |
| | DE - A1 - 2 330 865 (H. GLASER) <br> * Seite 1, letzter Absatz bis <br> Seite 2; Fig. 1 * <br> -- | 1,2,8 | |
| | DE - A1 - 2 639 515 (A. HOCH) <br> * Seite 4, Absatz 3 bis Seite 11; <br> Fig. 1 * <br> -- | 1,6,7 | **KATEGORIE DER GENANNTEN DOKUMENTE** <br> X: von besonderer Bedeutung <br> A: technologischer Hintergrund |
| | DE - U - 7 606 180 (K. LOHMÜLLER) <br> * Seiten 2 bis 4; Fig. 1 * <br> -- | 4,7,8 | O: nichtschriftliche Offenbarung <br> P: Zwischenliteratur <br> T: der Erfindung zugrunde <br> liegende Theorien oder <br> Grundsätze |
| | DE - U - 7 341 358 (R. JOHN) <br> * ganzes Dokument * <br> -- <br> ./.. | 4 | E: kollidierende Anmeldung <br> D: in der Anmeldung angeführtes <br> Dokument <br> L: aus andern Gründen <br> angeführtes Dokument |

| X | Der vorliegende Recherchenbericht wurde für alle Patentansprüche erstellt. | &: Mitglied der gleichen Patent- familie, übereinstimmendes Dokument |
|---|---|---|

| Recherchenort Berlin | Abschlußdatum der Recherche 02-12-1980 | Prüfer PAETZEL |
|---|---|---|

EPA form 1503.1 06.78

**0025203**

Europäisches
Patentamt

**EUROPÄISCHER RECHERCHENBERICHT**

Nummer der Anmeldung

EP 80 10 5205.1
- Seite 2 -

| Kategorie | Kennzeichnung des Dokuments mit Angabe, soweit erforderlich, der maßgeblichen Teile | betrifft Anspruch |
|---|---|---|
| | US - A - 2 999 711 (L.J. STURMER) <br> * Fig. 1 bis 4 * <br> -- | 6 |
| | DE - A - 2 028 231 (ATELIERS LORRAINS D'ELECTRO-MECANIQUE MORATILLE & DU-CHATEAU) <br> * Patentansprüche 1 bis 3; Fig. 1 und 2 * <br> -- | 9,10 |
| P | AT - B - 353 621 (F. CERVINKA) <br> * Seite 3, Zeilen 13 bis 16 * <br> -- | 5 |
| A | US - A - 2 727 770 (H.C. DAVIS) <br> * ganzes Dokument * <br> ---- | |

**EINSCHLÄGIGE DOKUMENTE**

KLASSIFIKATION DER ANMELDUNG (Int.Cl.3)

RECHERCHIERTE SACHGEBIETE (Int. Cl.3)

EPA Form 1503.2   06.78